# EUROPÄISCHE PATENTSCHRIFT

(11) **EP 2 240 709 B1**
(45) Veröffentlichungstag und Bekanntmachung des Hinweises auf die Patenterteilung: **28.09.2011**
(21) Anmeldenummer: 09706975.1
(22) Anmeldetag: 30.01.2009
(51) Int. Cl.: F16H 61/16, B60K 28/16

(54) **VORRICHTUNG UND VERFAHREN ZUM VERHINDERN VON FEHLSCHALTUNGEN IN AUTOMATISCHEN GETRIEBEN VON KRAFTFAHRZEUGEN**
DEVICE AND METHOD FOR PREVENTING ERRONEOUS SHIFTING IN AUTOMATIC TRANSMISSIONS OF MOTORIZED VEHICLES
DISPOSITIF ET PROCEDE EMPECHANT LE PASSAGE DE RAPPORTS INADEQUATS DANS DES TRANSMISSIONS AUTOMATIQUES DE VEHICULES MOTORISES

(30) Priorität: 01.02.2008 DE 102008008065
(43) Veröffentlichungstag der Anmeldung: 20.10.2010
(73) Patentinhaber: GETRAG Getriebe- und Zahnradfabrik Hermann Hagenmeyer GmbH & Cie KG, 74199 Untergruppenbach (DE)
(72) Erfinder: SEUFERT, Martin, 71711 Steinheim (DE)
(74) Vertreter: Witte, Weller & Partner
(86) Internationale Anmeldenummer: PCT/EP2009/000609
(87) Internationale Veröffentlichungsnummer: WO 2009/095250

(56) Entgegenhaltungen:
- EP-A- 0 802 354
- DE-A1-102004 002 813
- DE-A1-102006 018 791
- US-A1- 2003 158 645

## Beschreibung

Die vorliegende Erfindung betrifft ein System und ein Verfahren zum Verhindern von Fehlschaltungen bei automatischen Getrieben, damit es aufgrund von Schlupf nicht zu gefährlichen, instabilen Fahrzuständen kommt. Besonders bei drehmomentstarken Kraftfahrzeugen kann es bei z.B. öfters wechselnden Straßenneigungen oder stark differierenden Grip-Verhältnissen zu instabilen Zuständen kommen. Diese Zuständen sind zu vermeiden. Das Verhindern von Fehlschaltungen kann insbesondere auf dem Gebiet der Doppelkupplungsgetriebe Anwendung finden. Doppelkupplungsgetriebe weisen zwei parallele Teilgetriebe (Zweige) auf, denen jeweils eine eigene Reibkupplung (trocken- oder nasslaufend) zugeordnet ist.

Die Eingangsglieder der Reibkupplungen sind mit einer Antriebseinheit verbunden, wie z.B. ein Verbrennungsmotor. Die Antriebseinheit kann jedoch auch ein Elektromotor oder eine Hybridantriebseinheit sein. Dem einen Teilgetriebe sind die ungeraden Gangstufen (1, 3, 5, ...) zugeordnet. Dem anderen Teilgetriebe sind die geraden Gangstufen (2, 4, 6, ...) zugeordnet. Die Übertragung von Antriebsleistung von der Antriebseinheit auf angetriebene Räder eines Kraftfahrzeugs erfolgt generell über eines der zwei Teilgetriebe. In dem jeweils nicht aktiven Teilgetriebe ist in der Regel eine Gangstufe vorgewählt. Ein Gangwechsel von dem Startgang des aktiven Teilgetriebes zu dem Zielgang des nicht aktiven Teilgetriebes kann dann durch Überschneiden der Betätigung der eingangsseitigen Reibkupplungen erfolgen. Diese überschneidende Betätigung kann dabei so durchgeführt werden, dass keine Zugkraftunterbrechung während des Gangwechsels auftritt.

Das entsprechende Ansteuern der Reibkupplungen und das Ein- und Auslegen von Gangstufen erfolgt in der Regel automatisiert, und zwar mittels einer übergeordneten Steuereinheit. Diese Steuereinheit kann ferner mit einer Steuereinheit für die Antriebseinheit verbunden sein. Dabei versteht sich, dass die Steuereinheit, das über die jeweiligen Reibkupplungen übertragene Drehmoment und die in den jeweiligen Teilgetrieben eingestellten Übersetzungen so wählt, dass diese an die aktuelle Fahrsituation (Geschwindigkeit des Fahrzeugs, Zug- oder Schubbetrieb, etc.) angepasst sind.

Die Druckschrift US 2003/158645 A1 wird als nächster Stand der Technik angesehen und offenbart Merkmale des Oberbegriffs der Ansprüche 1 und 8.

Bei automatischen und automatisierten Kraftfahrzeuggetrieben ist eine erhöhte Anforderung an die Sicherheit zu stellen.

Die DE 100 08 665 A1 offenbart ein Verfahren zur Steuerung von Antriebssystemen eines Kraftfahrzeugs. Insbesondere beim Einsatz von Automatikgetrieben sollen ein Kriechen in der Ebene, ein Zurückrollen am Berg sowie Pendelschaltungen vermieden werden. Dazu werden Daten wie z.B. die Fahrzeugsgeschwindigkeit, Abstand, Position, Trajektorien, Verkehrsdichte, Kraftschluss der Reifen, Informationen aus aktiven Schildern, Ampeln etc verwendet. Eine vorausschauende Schaltstrategie wird diskutiert.

Die DE 199 62 963 A1 offenbart ein Verfahren zur Regelung einer Motordrehzahl während eines Schaltvorgangs. Dazu werden Mittel vorgesehen, mit denen eine Solldrehzahl des Fahrzeugmotors in Abhängigkeit von einer Synchrondrehzahl einer neu einzustellenden Übersetzung des Getriebes (Gangwechsel) ermittelt wird. Daneben wird eine Dynamik eines Momentenaufbaus, ausgehend von einer aktuellen Motordrehzahl, einem aktuellen Motormoment und einer in einem Momentenspeicher hinterlegten Motormomentenvergangenheit mit Hilfe eines Prädiktors ermittelt, wobei durch den Prädiktor eine sich am Ende eines Vorhersagehorizonts voraussichtlich einstellende Drehzahl ausgegeben wird.

Die DE 10 2006 007 666 A1 zeigt Kennfelder für Gangwechsel.

Diese Aufgabe wird durch ein Verfahren zum Verhindern von Fehlschaltungen in automatischen Getrieben von Kraftfahrzeugen gelöst, das die folgenden Schritte aufweist: Verfahren zum Verhindern von Fehlschaltungen in automatischen Getrieben von Kraftfahrzeugen, mit den folgenden Schritten: Bestimmen eines momentanen Abtriebmoments für einen Quellgang; Erzeugen einer Abtriebsmomenthistorie, indem das momentane Abtriebsmoment im Quellgang für ein Zeitintervall mit vorbestimmter Dauer gespeichert wird; Bestimmen eines Betrags eines minimalen Abtriebmoments und eines Betrags eines maximalen Abtriebsmoments aus der Abtriebsmomenthistorie, Vergleichen dieser beiden Betragswerte sund Betimmen des größeren Betragswerts; Bestimmen eines Zielmoments für einen Zielgang, wenn ein Gangwechselbefehl vorliegt; Vergleichen des Betrags des Zielmoments mit dem größeren Betragswert; und Schalten des Getriebes vom Quellgang in den Zielgang, wenn der Betrag des Zielmoments kleiner oder gleich dem größeren Betragswert ist. Im Gegensatz zum Stand der Technik, bei dem Schlupf in den Antriebsrädern erst dann erkannt werden konnte, wenn er bereits vorhanden war, da die Systeme im Stand der Technik den Schlupf durch Vergleich zwischen den Drehzahlen der Antriebsachse und der nicht angetriebenen Achse ermittelt haben, verhindert die vorliegende Erfindung den Schlupf bereits, bevor er zustande kommt. Gemäß der vorliegenden Erfindung ist es nicht erforderlich, dass der Schaltbefehl tatsächlich ausgeführt wird. Gemäß der vorliegenden Erfindung ist es möglich, dass die Entscheidung, ob ein Gangwechsel tatsächlich ausgeführt wird, bereits im Vorfeld von einem zu befürchtenden Schlupf abhängig gemacht wird. Das Fahrzeug kommt also gar nicht in eine gefährliche Situation, die schlimmstenfalls nicht mehr abgefangen werden kann und in einen Unfall resultiert.

Das erfindungsgemäße Verfahren ist in der Lage, aktuelle Bedingungen (trockene Fahrbahn, nasse Fahrbahn, Eis, Schnee, usw.) beim Verhindern der Fehlschaltungen zu berücksichtigen. Dazu werden geeignete Messwerte aus der Vergangenheit für eine vorbestimmte Zeitdauer abgespeichert und fortschreitend zyklisch überschrieben.

Gemäß einer bevorzugten Ausführungsform wird nicht in den Zielgang geschaltet, wenn der Betrag des Drehmoments größer als der Betrag des maximalen Abtriebsmoments ist.

In solchen Fällen würde im Zielgang ein unzulässig hohes Abtriebsmoment übertragen werden. Das Abtriebsmoment im Zielgang wäre höher als jedes innerhalb der vergangenen Zeitdauer applizierte Abtriebsmoment. Die Lebenserfahrung spricht dafür, dass sich ein Fahrer immer an die aktuellen Bedingungen anpasst. Sind die Bedingungen schwierig, wie z.B. bei einer nassen Fahrbahn, so ist davon auszugehen, dass weniger große Abtriebsmomente appliziert werden, als wenn die Fahrbahn trocken wäre. Ergibt die Berechnung des Abtriebsmoments im Zielgang einen größeren Wert als bisher appliziert, so ist die Wahrscheinlichkeit, dass es zu Schlupf an den Antriebsrädern kommt, sehr groß. Indem eine Schaltung dann verhindert wird, erhöht sich die Sicherheit bedeutend.

Ferner ist es von Vorteil, wenn geprüft wird, ob der Schaltvorgang vom Quellgang in den gewünschten Zielgang in Abhängigkeit von der Motordrehzahl zulässig ist.

Mit diesem Schritt wird überprüft, ob die gewünschte Schaltung überhaupt möglich ist. Ein Wechsel z.B. vom 6. in den 1. Gang dürfte in der Regel nicht möglich sein.

Weiterhin ist es bevorzugt, wenn der oder die Zielgänge vorab durch ein Auswerten eines entsprechenden Kennfelds bestimmt wird bzw. werden.

In Abhängigkeit von der Motordrehzahl lässt sich ausgehend vom Quellgang auf einfache Weise bestimmen, welche Schaltungen grundsätzlich möglich wären. Indem vorab mögliche Zielgänge bestimmt werden, können die entsprechenden Momente parallel ermittelt werden, so dass die Berechnung des Abtriebsmoments für jeden der (zulässigen) Zielgänge bereits vor Eingang des gewünschten Schaltvorgangbefehls bereits parallel durchgeführt werden kann. Dies resultiert in einer Zeiteinsparung, so dass tatsächlich gewünschte Schaltungen schneller durchführbar sind.

Bei einer weiteren Ausführungsform wird bei der Bestimmung des Zielmoments zumindest eine Störgröße, insbesondere eine Schalthysterese, berücksichtigt.

Weiterhin hat es sich als vorteilhaft herausgestellt, wenn die Abtriebsmomenthistorie Werte aufweist, die von einem momentanen Zeitpunkt zu einem vorbestimmten Zeitpunkt in der Vergangenheit reichen und die ständig aktualisiert werden.

Auf diese Weise ist es möglich, Informationen aus der Vergangenheit zu gewinnen, um Aussagen über das zukünftige Verhalten des Fahrzeugs beim Applizieren von gewünschten Abtriebsmomenten vorherzusagen.

Außerdem ist es von Vorteil, wenn die Bestimmung des Zielmoments durch einen Schaltbefehl initiiert wird, der entweder von einem Fahrer oder einer zentralen Steuerung ausgegeben wird.

Die Aufgabe wird ferner durch ein System zum Verhindern von Fehlschaltungen in automatischen Getrieben von Kraftfahrzeugen gelöst, wobei das System aufweist:
- eine Einrichtung zum Bestimmen eines momentanen Abtriebmoments für einen Quellgang;
- Mitteln zum Erzeugen einer Abtriebsmomenthistorie, wobei das momentane Abtriebsmoment im Quellgang für ein Zeitintervall mit vorbestimmter Dauer (tᵢₛₜ - t') gespeichert wird;
- Mitteln zum Bestimmen eines Betrags eines minimalen Abtriebmoments und eines Betrags eines maximalen Abtriebsmoments aus der Abtriebsmomenthistorie, zum Vergleichen dieser Beträge miteinander und zum Bestimmen des größeren Betragwerts;
- eine Einrichtung zum Bestimmen eines Betrags eines Zielmoments für einen Zielgang, wenn ein Gangwechselbefehl vorliegt;
- eine Vergleichereinheit zum Vergleichen des Betrags des Zielmoments mit dem größeren Betragswert, und zum Ausgeben eines Schaltbefehls zum Schalten des Getriebes vom Quellgang in den Zielgang, wenn der Betrag des Zielmoments kleiner oder gleich dem größeren Betragswert ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen schematischen Antriebsstrang eines Kraftfahrzeugs;
- Fig. 2: ein Flussdiagramm zum Verfahren gemäß der vorliegenden Erfindung;
- Fig. 3: ein System gemäß der vorliegenden Erfindung; und
- Fig. 4: eine Abtriebsmomenthistorie.

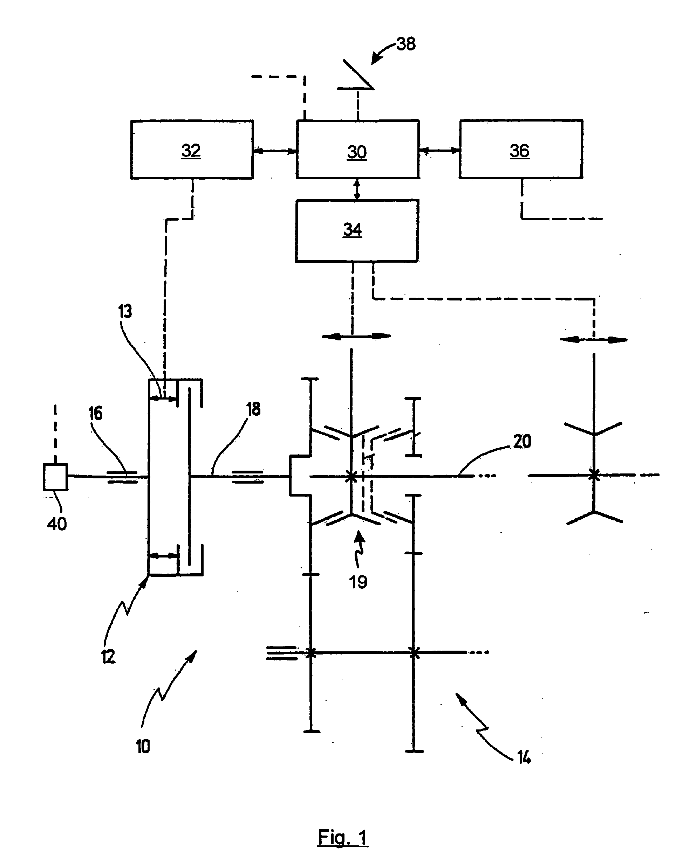

In Fig. 1 ist ein (einfacher) Antriebsstrang eines Kraftfahrzeugs generell bei 10 gezeigt.

Der Antriebsstrang 10 umfasst eine als Trenn- bzw. Anfahrkupplung wirkende Reibkupplung 12 und ein Stufengetriebe 14. Obwohl hier ein einfaches Stufengetriebe gezeigt ist, lässt sich die nachfolgend erläuterte Erfindung auch bei Doppelschaltgetriebe anwenden.

Die Trennkupplung 12 ist eine Reibungskupplung, die mittels eines Kupplungsaktuators 13 betätigt werden kann. In einer geschlossenen Stellung verbindet die Trennkupplung 12 eine Motorabtriebswelle 16 kraftschlüssig mit einer Eingangswelle 18 des Getriebes 14. In einer geöffneten Stellung sind die zwei Wellen 16, 18 voneinander getrennt. Während des Öffnens und Schließens der Trennkupplung 12 durchläuft die Trennkupplung 12 eine Schleifphase. Hierbei treten zwei Elemente der Trennkupplung 12 mit unterschiedlichen Drehzahlen reibend miteinander in Eingriff. Bei einem sog. "Schlepppunkt" hat der Kupplungsaktuator 13 die beiden mit unterschiedlicher Drehzahl drehenden Kupplungselemente gerade so nah aneinander gerückt, dass ein vordefiniertes Schleppdrehmoment von der Motorabtriebswelle 16 auf die Getriebeantriebswelle 18 übertragen wird. Die Kupplungselemente weisen dann aber weiterhin unterschiedliche Drehzahlen auf.

Das Stufengetriebe 14 überträgt die Leistung des Motors des Kraftfahrzeugs von der Getriebeeingangswelle 18 bzw. der Antriebswelle 18 auf eine Getriebeausgangswelle bzw. eine Abtriebswelle 20. Das Getriebe 14 umfasst eine Mehrzahl von Radsätzen. Jeder Radsatz umfasst mindestens zwei Zahnräder. Zwischen den Radsätzen ist an der Abtriebswelle 20 eine als Synchronisierungseinrichtung 19 ausgebildete Schaltkupplung angeordnet. Die Synchronisierungseinrichtung ist beim Einlegen eines Gangs in der Lage, Differenzdrehzahlen zwischen der Abtriebswelle 20 und dem mit dieser zu verbindenden Zahnrad auf Null zu reduzieren, um somit die beiden Getriebebauteile zu synchronisieren.

Das Kraftfahrzeug, in das der Antriebsstrang 10 eingebaut ist, umfasst ferner eine zentrale Steuerung 30, eine Kupplungssteuerung 32, eine Getriebesteuerung 34 und eine Motorsteuerung 36. Die zentrale Steuerung 30 kann ferner mit einem Fahrpedal 38 sowie mit einem Motordrehzahlmesser 40 verbunden sein. Die zentrale Steuerung 30 ist auch mit der Kupplungssteuerung 32, der Getriebesteuerung 34 und der Motorsteuerung 36 verbunden und koordiniert deren Steuerungsaufgaben. Es versteht sich, dass die in Fig. 1 als einzelne Steuerungen gezeigten Elemente in Form von Software implementiert werden können, wobei die Einzelsteuerungen 32, 34 und 36 jeweils einzelne Programmmodule eines Gesamtsteuerungsprogramms bilden können.

Fehlschaltungen oder ungewollte Schaltungen bei automatischen bzw. automatisierten Getrieben, können zu kritischen Fahrsituationen führen, indem aufgrund der Fehlschaltung ein zu hohes oder zu geringes Abtriebsmoment an die Räder übertragen wird. Exemplarisch sei ein Herunterschalten vom 4. Gang in den 2. Gang, insbesondere auf z.B. nasser Fahrbahn, genannt. In dieser Situation können die Antriebsräder blockieren, wenn in den niedrigeren Gang geschaltet wurde. Dies kann insbesondere bei heckangetriebenen Fahrzeugen problematisch sein, wenn z.B. auf der Autobahn während eines Überholmanövers mit Spurwechsel eine Schaltung aus dem 4. Gang in den 2. Gang vorgenommen wird. Blockieren die Räder während des Spurwechsels, kann es zu einem seitlichen Ausbrechen des Fahrzeugs kommen.

Zu hohe Antriebs- bzw. Bremsmomente können zu positivem oder negativem Schlupf an den Antriebsrädern führen, wodurch das Fahrzeug instabil wird.

Solche Fehlschaltungen können sowohl durch einen Fehler im System (z.B. in der zentralen Steuerung 30) oder durch den Fahrer (Verschalten) ausgelöst werden. Liegt eine Motordrehzahl nₘₒₜₒᵣ während, d.h. nach, einer Fehlschaltung in einem zulässigen Bereich, d.h., wenn die Motordrehzahl sowohl im Quellgang als auch im Zielgang zulässig ist, lässt sich die Schaltung allein aufgrund der Motordrehzahlverhältnisse nicht unterbinden.

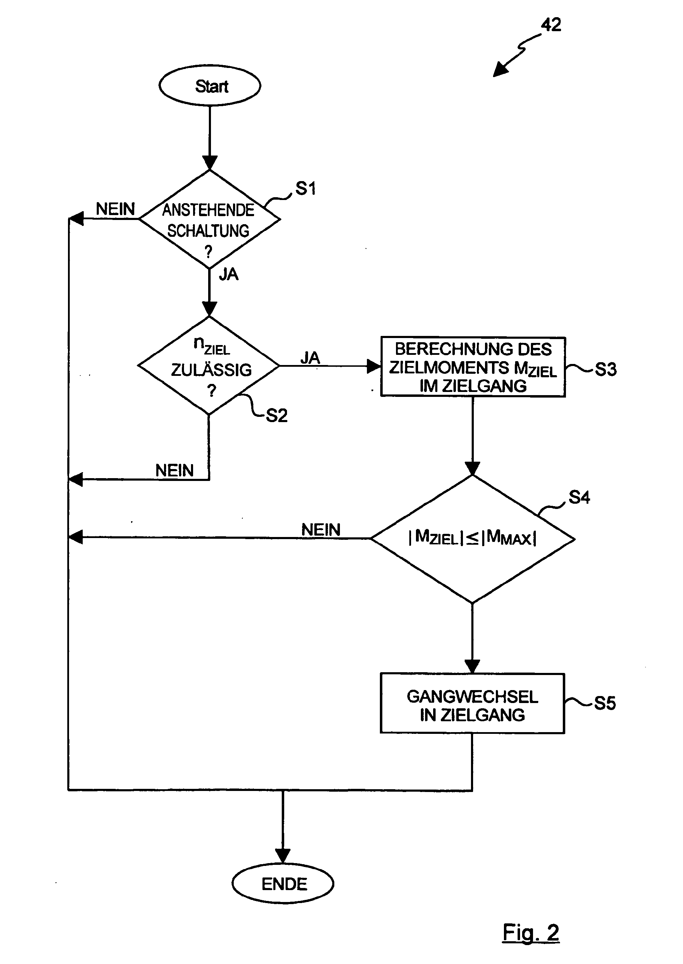

Unter Bezugnahme auf Fig. 2 wird nachfolgend das Verfahren zum Verhindern von Fehlschaltungen gemäß der vorliegenden Erfindung erläutert.

Beim erfindungsgemäßen Verfahren 42 wird in einem ersten Schritt S1 festgestellt, ob ein Schaltvorgang ansteht, d.h., ob ein Gang aufgrund eines Befehls der zentralen Steuerung 30 oder aufgrund eines Schaltbefehls des Fahrers veranlasst werden soll. Steht eine Schaltung an, so soll von einem Quellgang G_{QUELL} in einen Zielgang G_{ZIEL} geschaltet werden. Bei einer Rückschaltung vom 4. Gang in den 2. Gang würde also der 4. Gang den Quellgang G_{QUELL} und der 2. Gang den Zielgang G_{ZIEL} darstellen.

Wenn festgestellt wurde, dass geschaltet werden soll, wird in einem zweiten Schritt S2 überprüft, ob die Motordrehzahl im Zielgang n_{ZIEL} in einem zulässigen Bereich liegt. Wie oben erläutert, ist das Getriebe 14 über die Reibkupplung 12 mit der Antriebseinheit, d.h. dem Motor, verbunden. Da das Übersetzungsverhältnis zwischen dem Quellgang G_{QUELL} und Zielgang G_{ZIEL} bekannt ist, lässt sich die Motordrehzahl bei Kenntnis der momentanen Motordrehzahl im Quellgang einfach bestimmen bzw. berechnen.

Liegt die Motordrehzahl im Zielgang außerhalb eines zulässigen Bereichs, erfolgt kein Gangwechsel. Liegt die Motordrehzahl nₘₒₜₒᵣ im Zielgang jedoch innerhalb des zulässigen Bereichs, so wird ein Abtriebsmoment M_{ZIEL} im Zielgang in einem Schritt S3 berechnet. Dabei werden Eingangsgrößen wie z.B. die Stellung des Fahrpedals 38, ein Drosselklappenwinkel, der Zielgang, die momentane Motordrehzahl, usw. berücksichtigt.

In einem Schritt S4 wird dieses berechnete Zielmoment M_{ZIEL} bzw. sein Betrag mit einem minimalen Abtriebsmoment Mₘᵢₙ bzw. einem maximalen Abtriebsmoment Mₘₐₓ verglichen, je nach dem welches der beiden Momente hinsichtlich seines Betrags größer ist. Es versteht sich, dass der Vergleich nicht mit beiden Werten erfolgen muss, sondern auch jeweils getrennt mit nur einem der Werte erfolgen kann. Dies hängt u.a. davon ab, ob es sich um eine Hochschaltung unter Zug oder Schub bzw. eine Rückschaltung unter Zug oder Schub handelt.

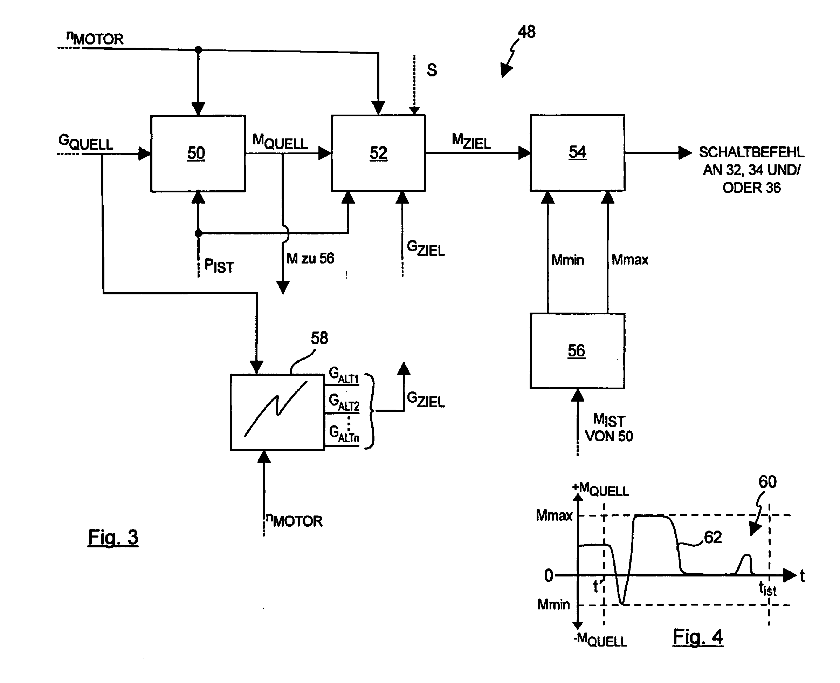

Vorzugsweise erfolgt der Vergleich jedoch mit dem größeren der beiden Werten Mₘᵢₙ und Mₘₐₓ. Die Werte Mₘᵢₙ und Mₘₐₓ werden aus einem Speicher ausgelesen, der zyklisch überschrieben wird und eine Abtriebsmomenthistorie für eine vorbestimmte Zeitdauer (z.B. 5 - 10 s) enthält. Danach wird verglichen, welcher der beiden Werte betragsmäßig größer ist. Der Betrag des größeren Werts wird als Basis für den Vergleich mit dem Betrag des Zielmoments M_{ZIEL} benutzt. In Fig. 2 ist der Betrag des größeren Moments aus Vereinfachungsgründen mit |Mₘₐₓ| angegeben. Eine genauere Beschreibung wird unten im Zusammenhang mit den Figuren 3 und 4 erfolgen.

Wird im Schritt S4 festgestellt, dass der Betrag des Zielmoments in einem zulässigen Abtriebsmomentbereich zwischen den Werten Mₘᵢₙ und Mₘₐₓ liegt bzw. kleiner als der Betrag des größeren Maximalmoments ist, erfolgt der Gangwechsel vom Quellgang G_{QUELL} in den Zielgang G_{ZIEL} (vgl. Schritt S5). Anderenfalls erfolgt keine Schaltung.

Es versteht sich, dass das Abtriebsmoment auch ein Bremsmoment sein kann, wobei bei einem Bremsmoment eventuell zu berücksichtigen ist, dass dieses auf alle Räder wirkt, wohingegen Antriebsmomente lediglich auf die Antriebsräder wirken. Bei einem Bremsmoment ist die Ermittlung des maximalen Moments an einem Rad oder einer Achse wünschenswert.

Das Verfahren gemäß der vorliegenden Erfindung ist also in der Lage, einen Schlupf zu verhindern, bevor er am Rad auftritt. Das erfindungsgemäße Verfahren kann auch bei Allradsystemen angewendet werden. Fehlschaltungen werden vor dem Einlegen des Gangs erkannt. Besonders vorteilhaft ist die Anwendung des erfindungsgemäßen Verfahrens bei Schubrückschaltungen, da hier Fehlschaltungen für den Fahrer nur schwer zu beherrschen sind.

Bezug nehmend auf Fig. 3 ist ein System 48 gezeigt, das Fehlschaltungen verhindert, indem das Abtriebsmoment im Zielgang berechnet und mit Abtriebsmomentgrenzwerten Mₘᵢₙ und Mₘₐₓ bzw. dem Betrags des betragsmäßig größeren Moments verglichen wird, die bzw. das man aus einer Abtriebsmomenthistorie erhält.

Das System 48 kann in die zentrale Steuerung 30 integriert sein oder separat dazu vorgesehen werden. Es versteht sich, dass das System 48 sowohl in Form von Hardware vorliegen kann als auch durch Software implementiert sein kann.

Das System 48 umfasst eine erste Berechnungseinheit 50, um ein Abtriebsmoment (Antriebsmoment oder Schubmoment) an den Rädern bzw. Antriebsrädern eines Kraftfahrzeugs zu bestimmen. Dazu bekommt die Berechnungseinheit 50 mehrere Eingangsgrößen geliefert, wie z.B. die Motordrehzahl nₘₒₜₒᵣ, eine Angabe zum momentan eingelegten Gang, d.h. zum Quellgang G_{UELL}, eine Information über die momentane Stellung P_{IST} des Fahrpedals 38, usw.. Alternativ bzw. ergänzend könnten auch Informationen über eine Drosselklappenstellung, die Fahrzeuggeschwindigkeit, die Fahrzeugbeschleunigung o.Ä. die Berechnungseinheit 50 geliefert werden. Aus diesen Größen bestimmt die erste Berechnungseinheit 50 ein Abtriebsmoment M_{QUELL} (Schubmoment, Zugmoment) im Quellgang.

Die Informationen über das Abtriebsmoment M_{QUELL} im Quellgang wird an eine zweite Berechnungseinheit 52 geliefert. Die zweite Berechnungseinheit 52 erhält auch eine Information über die aktuelle Motordrehzahl nₘₒₜₒᵣ. Eine weitere Eingangsgröße für die zweite Berechnungseinheit 52 stellt die Angabe des Zielgangs G_{ZIEL} dar. Die zweite Berechnungseinheit 52 kann auch Störgrößen S, wie z.B. Schalthysteresen, berücksichtigen, was in Fig. 3 mittels einer Strichlinie dargestellt ist. Es versteht sich, dass die zuvor im Zusammenhang mit der ersten Berechnungseinheit 50 erwähnten Größen ebenfalls Eingangsgrößen der zweiten Berechnungseinheit 52 darstellen könnten. Auch könnte die Berechungseinheit 50 mit der Berechnungseinheit 52 vereint werden.

Aus diesen Eingangsgrößen, insbesondere bei Kenntnis des Übersetzungsverhältnisses zwischen dem Quellgang und dem Zielgang, berechnet die zweite Berechnungseinheit 52 ein Abtriebsmoment (Schubmoment oder Zugmoment) M_{Ziel} im Zielgang und liefert diese Information an eine Vergleichereinheit 54.

Die Vergleichereinheit 54 vergleicht das (berechnete) Abtriebsmoment M_{ZIEL} bzw. dessen Betrag mit einem minimalen Abtriebsmoment Mₘᵢₙ und/oder einem maximalen Abtriebsmoment Mₘₐₓ (vgl. Schritt S4 der Fig. 2) bzw. dessen Betrag, um zu entscheiden, ob tatsächlich ein Schaltbefehl zum Gangwechsel in den Zielgang (vgl. Schritt S5) an die für den Gangwechsel verantwortlichen Steuereinrichtungen ausgegeben werden kann.

Die Vergleichswerte Mₘᵢₙ und Mₘₐₓ erhält die Vergleichereinheit 54 von einer Speichereinrichtung 56. Die Speichereinrichtung 56 bekommt von der Berechnungseinheit 50 Informationen über die momentanen Abtriebsmomente M_{IST} im Quellgang, d.h., über M_{Quell}, geliefert. Die Speichereinrichtung 56 erstellt aus diesen momentanen Abtriebsmomenten M_{IST} eine Abtriebsmomenthistorie 60, wie es in Fig. 4 schematisch dargestellt ist.

In Fig. 4 ist das Abtriebsmoment M_{Quell} gegenüber der Zeit t aufgetragen. Positive Werte des Abtriebsmoments M (im Quellgang) stellen Zugmomente dar. Negative Werte des Abtriebsmoments M stellen Schubmomente dar. Schubmomente treten z.B. dann auf, wenn ein Fahrer den Fuß vom Fahrpedal 38 nimmt und das Fahrzeug, insbesondere bergab, rollt. Zugmomente liegen dann vor, wenn z.B. der Fahrer "Gas gibt", d.h. wenn das Fahrzeug mit Hilfe der Motorkraft beschleunigt wird.

In Fig. 4 ist ein exemplarischer Verlauf 62 des Abtriebsmoments für einen gewissen Zeitraum von einem momentanen Zeitpunkt t_{IST} bis zu einem vorbestimmten Zeitpunkt t' in der Vergangenheit dargestellt. Man erkennt, dass der Verlauf 62 anfangs positive Abtriebsmomente aufweist, die dann in den negativen Bereich abfallen, um anschließend wieder in den positiven Bereich anzusteigen. Daran schließt sich eine Phase an, während das Abtriebsmoment nahezu Null ist, um dann wieder kurzzeitig in den positiven Bereich zu wechseln. Der Verlauf 62 durchläuft während des Zeitintervalls tᵢₛₜ - t' ein minimales Abtriebsmoment Mₘᵢₙ und ein maximales Abtriebsmoment Mₘₐₓ. In der Fig. 4 sind diese Maxima durch horizontale Strichlinien verdeutlicht. Die Zeitgrenzen t' und tᵢₛₜ sind durch vertikale Strichlinien verdeutlicht. Die Werte tᵢₛₜ, t', Mₘᵢₙ und Mₘₐₓ definieren ein Informationsfenster, in dem die für die Vergleichereinheit 54 (Fig. 3) wesentlichen Informationen enthalten sind.

Die Zeitdauer des Fensters ist frei wählbar und kann in der Größenordnung von mehreren Sekunden liegen, wobei Abtriebsmomentwerte diskret oder kontinuierlich erfasst werden. Die Speichereinheit 56 verfügt über Mittel, die zum Extrahieren der Extremwerte Mₘₐₓ und Mₘᵢₙ geeignet sind.

Die Abtriebsmomenthistorie liefert eine Information über das Fahrverhalten für eine vorgegebene Zeitdauer in die Vergangenheit. Indirekt erhält man so auch einen Richtwert für den Reibwert zwischen Reifen und Fahrbahn. Bei nassen Straßenverhältnissen siecht der Verlauf 62 anders aus als bei trockenen Fahrbahnverhältnissen. Bei trockenen Fahrbahnverhältnissen können höhere Abtriebsmomente übertragen werden, ohne dass es zu Schlupf kommt.

Es könnten z.B. die letzten 60 Fahrsekunden berücksichtigt werden. Das größte Zugmoment betrug z.B. 500 Nm, wohingegen das "größte" Schubmoment nur -10 Nm groß war. Vergleicht man das Zielmoment M_{ZIEL} mit dem Betrag des größeren der beiden Werte, d.h. mit einem Betrag von 500 Nm, so würden auch Schaltungen unter Schub bei z.B. -300 Nm zugelassen werden, obwohl das "größte" Schubmoment nur - 10 Nm groß war. Alternativ könnte man diese Schaltung aber auch untersagen, da das kleinste verwendete Moment "nur" -10 Nm war. Damit würde man sich aber eventuell viele praktisch und technisch sinnvolle Schaltvorgänge versagen, so dass ein Vergleich mit dem Betrag des größeren der beiden Werte bevorzugt wird.

Das System 48 kann also aus der Abtriebsmomenthistorie 60 ableiten, welche Abtriebsmomente übertragbar sind und welche nicht. Sollte das Abtriebsmoment M_{Ziel}, im Zielgang, was dessen Betrag betrifft, größer als der Betrag der Extremwerte Mₘᵢₙ bzw. Mₘₐₓ sein, so ist die Wahrscheinlichkeit, dass es zu Schlupf kommt, relativ groß. Die Vergleichereinheit 54 entscheidet in solchen Fällen, dass der gewünschte Schaltvorgang nicht ausgeführt wird, wodurch Schlupf ausgeschlossen ist. Liegt das berechnete Abtriebsmoment M_{Ziel} im Zielgang jedoch innerhalb des Bereichs, der durch die beiden Extremwerte Mₘᵢₙ bzw. Mₘₐₓ bzw durch den Betrag des größeren der beiden Werte vorgegeben ist, so kann ausgeschlossen werden, dass es im Zielgang zu Schlupf kommt. Die Vergleichereinheit 54 gibt dann den Schaltbefehl aus.

Somit ist es möglich, vor der Durchführung des Schaltvorgangs festzustellen, ob Schlupf vorliegt oder nicht.

Anstelle des Abtriebsmoments könnten auch andere Bezugsgrößen erfasst werden, wie z.B. eine Fahrzeugbeschleunigung. Anstelle des Abtriebsmoments M_{Ziel} im Zielgang würde dann die Beschleunigung im Zielgang berechnet werden.

Ferner ist in Fig. 3 eine weitere Berechnungseinheit 58 gezeigt, mit der ausgehend vom Quellgang G_{QUELL} die verschiedenen, möglichen Zielgänge G_{ZIEL} bestimmt werden. Die Einheit 58 gibt mehrere alternativ zulässige Zielgänge G_{ALT1}, G_{ALT2}, G_{ALTn} aus. Als Eingangsgröße wird die Motordrehzahl zugeführt, so dass anhand von bekannten Kennlinien die alternativ möglichen Zielgänge bestimmt werden können.

Es versteht sich, dass die Eingangsgröße G_{ZIEL} für die Berechnungseinheit 52 sowohl aufgrund eines Schaltwunsches des Fahrers als auch eines Schaltbefehls der zentralen Steuerung 30 zustande kommen kann.

Obwohl das Vergleichen von Betragswerten eine recht elegante Vorgehensweise darstellt, ist es auch möglich Absolutwerte der verschiedenen Momente miteinander zu vergleichen.

## Patentansprüche

1. Verfahren (42) zum Verhindern von Fehlschaltungen in automatischen Getrieben (14) von Kraftfahrzeugen, mit den folgenden Schritten:
Bestimmen eines momentanen Abtriebmoments (M_{IST}) für einen Quellgang (G_{QUELL});
Bestimmen (S3) eines Zielmoments (M_{ZIEL}) für einen Zielgang (G_{ZIEL}), wenn ein Gangwechselbefehl vorliegt; **gekennzeichnet durch**:
Erzeugen einer Abtriebsmomenthistorie, indem das momentane Abtriebsmoment im Quellgang (G_{QUELL}) für ein Zeitintervall mit vorbestimmter Dauer gespeichert wird;
Bestimmen eines Betrags eines minimalen Abtriebmoments (Mₘᵢₙ) und eines maximalen Abtriebsmoments (Mₘₐₓ) aus der Abtriebsmomenthistorie (60), und Vergleichen der beiden Beträge und Bestimmen, welcher den größeren Betragswert hat;
Vergleichen (S4) des Betrags des Zielmoments (M_{ZIEL}) mit dem größeren Betragswert; und
Schalten (S5) des Getriebes (14) vom Quellgang (G_{QUELL}) in den Zielgang (G_{ZIEL}), wenn der Betrag des Zielmoments (M_{ZIEL}) kleiner oder gleich dem größeren Betragswert ist.

2. Verfahren nach Anspruch 1, wobei nicht in den Zielgang (M_{ZIEL}) geschaltet wird, wenn der Betrag des Zielmoments (M_{ZIEL}) größer als der Betrag eines maximalen Abtriebsmoment (Mₘₐₓ) ist.

3. Verfahren nach Anspruch 1 oder 2, wobei ferner geprüft wird, ob der Schaltvorgang vom Quellgang (G_{QUELL}) in den gewünschten Zielgang (G_{ZIEL}) in Abhängigkeit von der Motordrehzahl (nₘₒₜₒᵣ) zulässig ist.

4. Verfahren nach Anspruch 3, wobei der oder die Zielgänge (G_{ALT1}, G_{ALT2}, G_{ALTn}) vorab durch Auswerten eines entsprechenden Kennfelds bestimmt wird bzw. werden.

5. Verfahren nach einem der vorhergehenden Ansprüche, wobei bei der Bestimmung des Zielmoments (M_{ZIEL}) zumindest eine Störgröße (S), insbesondere eine Schalthysterese, berücksichtigt wird.

6. Verfahren nach einem der vorhergehenden Ansprüche, wobei die Abtriebsmomenthistorie (60) Werte aufweist, die von einem momentanen Zeitpunkt (tᵢₛₜ) bis zu einem vorbestimmten Zeitpunkt (t') in der Vergangenheit reichen und die ständig aktualisiert werden.

7. Verfahren nach einem der vorhergehenden Ansprüche, wobei die Bestimmung des Zielmoments (M_{ZIEL}) durch einen Schaltbefehl initiiert wird, der entweder von einem Fahrer oder einer Steuerung (30; 48) ausgegeben wird.

8. System (48) zum Verhindern von Fehlschaltungen in automatischen Getrieben (14) von Kraftfahrzeugen, mit:
einer Einrichtung (50) zum Bestimmen eines momentanen Abtriebmoments (M_{IST}) für einen Quellgang (G_{QUELL});
einer Einrichtung (52) zum Bestimmen eines Betrags eines Zielmoments (M_{ZIEL}) für einen Zielgang (G_{ZIEL}), wenn ein Gangwechselbefehl vorliegt; gekennzeicnet durch
Mitteln (56) zum Erzeugen einer Abtriebsmomenthistorie (60), wobei das momentane Abtriebsmoment (M_{QUELL}) im Quellgang (G_{QUELL}) für ein Zeitintervall mit vorbestimmter Dauer (tᵢₛₜ - t') gespeichert wird;
Mitteln (56) zum Bestimmen eines Betrags eines minimalen Abtriebmoments (Mₘᵢₙ) und eines Betrags eines maximalen Abtriebsmoments (Mₘₐₓ) aus der Abtriebsmomenthistorie (60), und zum Vergleichen dieser Beträge miteinander, um den größeren Betragswert zu bestimmen;
einer Vergleichereinheit (54) zum Vergleichen des Betrags des Zielmoments (M_{ZIEL}) mit dem größeren Betragswert, und zum Ausgeben eines Schaltbefehls zum Schalten (S5) des Getriebes (14) vom Quellgang (G_{QUELL}) in den Zielgang (G_{ZIEL}), wenn der Betrag des Zielmoments (M_{ZIEL}) kleiner oder gleich dem größeren Betragswert ist.

## Claims

1. A method (42) for preventing incorrect gear shifts in automatic transmissions (14) of motor vehicles, comprising the following steps:
determining a current output torque (Mᵢₛ) of a source gear (G_{SOURCE});
determining (S3) a target torque (M_{TARGET}) of the target gear (G_{TARGET}) if an instruction for a gear change exists; **characterized by**
generating a history of output torques by storing the current output torque of the source gear (G_{SOURCE}) for a time interval having a predetermined duration;
determining an absolute value of a minimum output torque (Mₘᵢₙ) and a maximum output torque (Mₘₐₓ) from the history (60) of output torques, and comparing the two absolute values and determining which of the two absolute values is the greater one;
comparing (S4) the absolute value of the target torque (M_{TARGET}) with the greater one of the absolute values; and
shifting (S5) the transmission (14) from the source gear (G_{SOURCE}) to the target gear (G_{TARGET}) if the absolute value of the target torque (M_{TARGET}) is less than or equal to the greater absolute value.

2. The method of claim 1, wherein shifting to the target gear (M_{TARGET}) is not performed, if the absolute value of the target torque (M_{TARGET}) is greater than the absolute value of a maximum output torque (Mmax).

3. The method of claims 1 or 2, wherein it is additionally checked whether the shifting process from the source gear (G_{SOURCE}) to the desired target gear (G_{TARGET}) is allowable in dependence on the engine speed (n_{engine}).

4. The method of claim 3, wherein the target gears (G_{ALT1}, G_{ALT2}, G_{ALTn}) are determined in advance by evaluating a corresponding field of characteristic lines.

5. The method of any of the preceding claims, wherein the determination of the target torque (M_{TARGET}) at least considers one disturbance (S), in particular shifting hysteresis.

6. The method of any of the preceding claims, wherein the history (60) of output torques comprises values which are permanently updated, reaching from a current point in time (tᵢₛ) up to a predetermined point in time (t') in the past.

7. The method of any of the preceding claims, wherein the determination of the target torque (M_{TARGET}) is initiated by a shifting instruction which is either output by the driver or a control (30, 48);

8. System (48) for preventing incorrect gear shifts in automatic transmissions (14) of motor vehicles, comprising:
a device (50) for determining a current output torque (Mᵢₛ) of a source gear (G_{SOURCE});
a device (52) for determining an absolute value of a target torque (M_{TARGET}) of a target gear (G_{TARGET}), if an instruction for a gear change exists; **characterized by**
means (56) for generating a history (60) of output torques, wherein the current output torque M_{SOURCE} of the source gear (G_{SOURCE}) is stored for a time interval having a predetermined duration (tᵢₛ - t');
means (56) for determining an absolute value of a minimal output torque (Mₘᵢₙ) and an absolute value of a maximum output torque (Mₘₐₓ) from the history of output torques (60), and comparing these absolute values with each other and determining the greater absolute value;
a comparison unit (54) for comparing the absolute value of the target torque (M_{TARGET}) with the greater absolute value, and for outputting a shifting instruction in order to shift (S5) the transmission (14) from the source gear (G_{SOURCE}) to the target gear (G_{TARGET}), if the absolute value of the target torque (M_{TARGET}) is less than or equal to the greater absolute value.

## Revendications

1. Procédé (42) pour empêcher le passage de rapports incorrect dans des boîtes de vitesse automatiques (14) de véhicules automobiles, comprenant les étapes consistant à :
déterminer un couple de prise de force instantané (M_{IST}) pour un rapport source (G_{QUELL}) ;
déterminer (S3) un couple cible (M_{ZIEL}) pour un rapport cible (G_{ZIEL}), lorsqu'un ordre de changement de rapport existe ; **caractérisé par** les étapes consistant à :
produire un historique des couples de prise de force, en mémorisant pendant un intervalle de temps de durée prédéterminée le couple de prise de force instantané dans le rapport source (G_{QUELL}) ;
déterminer une valeur d'un couple de prise de force minimal (Mₘᵢₙ et d'un couple de prise de force maximal (Mₘₐₓ) à partir de l'historique des couples de prise de force (60), et comparer les deux valeurs et déterminer laquelle est la valeur absolue la plus grande ;
comparer (S4) la valeur du couple cible (M_{ZIEL}) pour un rapport cible (G_{ZIEL}) avec la valeur absolue la plus grande ; et
commuter (S5) la boîte de vitesse (14) du rapport source (G_{QUELL}) au rapport cible (G_{ZIEL}), lorsque la valeur du couple cible (M_{ZIEL}) est inférieure ou égale à la valeur absolue la plus grande.

2. Procédé selon la revendication 1, dans lequel on ne commute pas au rapport cible (G_{ZIEL}) lorsque la valeur du coupe cible (M_{ZIEL}) est supérieure à la valeur d'un couple de prise de force maximal (Mₘₐₓ).

3. Procédé selon la revendication 1 ou 2, dans lequel on vérifie en outre si l'opération de commutation du rapport source (G_{QUELL}) au rapport cible (G_{ZIEL}) souhaité est autorisée en fonction du régime du moteur (nₘₒₜₒᵣ).

4. Procédé selon la revendication 3, dans lequel le ou les rapports cibles (G_{ALT1}, G_{ALT2}, G_{ALTn}) sont déterminés au préalable par analyse d'un champ caractéristique correspondant.

5. Procédé selon l'une quelconque des revendications précédentes, dans lequel, lors de la détermination du couple cible (M_{ZIEL}), on tient compte d'au moins une valeur perturbatrice (S), notamment une hystérésis de commutation.

6. Procédé selon l'une quelconque des revendications précédentes, dans lequel l'historique des couples de prise de force (60) présente des valeurs qui vont d'un instant présent (tᵢₛₜ) à un instant prédéterminé (t') dans le passé et qui sont mises à jour en continu.

7. Procédé selon l'une quelconque des revendications précédentes, dans lequel la détermination du couple cible (M_{ZIEL}) est amorcée par un ordre de commutation, qui est émis soit par un conducteur soit par une commande (30 ; 48).

8. Système (48) pour empêcher le passage de rapports incorrect dans des boîtes de vitesse automatiques (14) de véhicules automobiles, comprenant :
un dispositif (50) pour déterminer un couple de prise de force instantané (M_{IST}) pour un rapport source (G_{QUELL}) ;
un dispositif (52) pour déterminer une valeur d'un couple cible (M_{ZIEL}) pour un rapport cible (G_{ZIEL}), lorsqu'un ordre de changement de rapport existe ; **caractérisé par**
des moyens (56) pour produire un historique des couples de prise de force (60), le couple de prise de force instantané (M_{QUELL}) dans le rapport source (G_{QUELL}) étant mémorisé pendant un intervalle de temps de durée prédéterminée (tᵢₛₜ - t') ;
des moyens (56) pour déterminer une valeur d'un couple de prise de force minimal (Mₘᵢₙ) et une valeur d'un couple de prise de force maximal (Mₘₐₓ) à partir de l'historique des couples de prise de force (60), et pour comparer ces valeurs les unes aux autres, afin de déterminer la valeur absolue la plus grande ;
une unité de comparaison (54) pour comparer la valeur du couple cible (M_{ZIEL}) avec la valeur absolue la plus grande, et pour fournir un ordre de commutation pour commuter (S5) la boîte de vitesse (14) du rapport source (G_{QUELL}) au rapport cible (G_{ZIEL}), lorsque la valeur du couple cible (M_{ZIEL}) est inférieure ou égale à la valeur absolue la plus grande.
